# EUROPÄISCHE PATENTANMELDUNG

(11) **EP 2 685 099 A2**
(43) Veröffentlichungstag der Anmeldung: **15.01.2014**
(21) Anmeldenummer: 13171244.0
(22) Anmeldetag: 10.06.2013
(51) Int. Cl.: F03D 11/04

(54) **Stützstruktur für eine Offshore-Energieerzeugungsanlage**

(30) Priorität: 10.07.2012 DE 102012013616
(71) Anmelder: Voith Patent GmbH, 89522 Heidenheim (DE)
(72) Erfinder: Maier, Wolfgang, 89564 Nattheim (DE)
(74) Vertreter: Dr. Weitzel & Partner

(57) **Zusammenfassung**

Die Zusammenfassung betrifft eine Stützstruktur für eine Offshore-Energieerzeugungsanlage, umfassend eine Pfahlgründung mit wenigstens einem Fundamentpfahl, der sich unter den Meeresgrund erstreckt; und einen Turm, der sich wenigstens mittelbar an der Pfahlgründung abstützt.

Die Erfindung ist dadurch gekennzeichnet, dass innerhalb der Stützstruktur ein trockenes Kompartiment mit einem wasserdicht verschließbaren fundamentseitigem Schott vorliegt, das in wenigstens mittelbarer Verbindung zu einem Durchgang steht, der sich unter dem Meeresgrund durch eine Außenwandung des Fundamentpfahls erstreckt.

## Beschreibung

Die Erfindung betrifft eine Stützstruktur für eine Offshore-Energieerzeugungsanlage mit den oberbegrifflichen Merkmalen von Anspruch 1 sowie eine Offshore-Energieerzeugungsanlage und ein Verfahren für deren Errichtung.

Offshore-Energieerzeugungsanlagen stellen Wind-, Wellen- oder Meeresströmungskraftwerke, insbesondere Gezeitenkraftwerke, an einem landfernen Standort dar. Bekannte Bauformen nutzen einen rotorförmigen Leistungsaufnehmer mit einer horizontalen Drehachse an einer Maschinengondel, der von einer Stützstruktur in Form eines Turms getragen wird. Weitere Bauformen derart freistehender Anlagen stellen Vertikalachsturbinen dar. Des Weiteren sind oszillierende Konvertoren zur Aufnahme kinetischer Energie aus einer antreibenden Fluidbewegung bekannt.

Vorliegend werden Anlagen behandelt, deren Stützstruktur neben einem Turm eine Pfahlgründung umfasst. Dabei stützt sich der Turm wenigstens mittelbar an der Pfahlgründung ab. Der Pfahlgründung ist wenigstens ein Fundamentpfahl zugeordnet, der sich unter den Meeresgrund erstreckt. Eine mögliche Ausführung einer solchen Stützstruktur stellen Monopiles dar, für die Turm und Fundamentpfahl einstückig ausgebildet sind. Dabei wird unter dem Fundamentpfahl einer solchen Stützstruktur jener Teil des Monopiles verstanden, der in einer Bohrung am Meeresgrund einzementiert wird. Entsprechend stellt der Turm den über den Meeresgrund hinausragenden Teil der Stützstruktur dar. Unter gattungsgemäße Stützstrukturen fallen auch Offshore-Bauwerke, deren Pfahlgründung mehr als einen Fundamentpfahl aufweist. Bekannte Ausführungen verwenden dreibeinige Fundamente (Tripods). Des Weiteren besteht die Möglichkeit, den Turm mehrteilig auszuführen und vollständig tauchend oder über die Wasseroberfläche reichend auszubilden.

Die Errichtung von Offshore-Energieerzeugungsanlagen kann modular erfolgen, wobei zunächst die Stützstruktur installiert wird. Diese umfasst am oberen Ende des Turms ein Kopplungselement, auf das die Maschinengondel der Anlage in einem nachfolgenden Installationsschritt aufgesetzt wird. Typischerweise liegt an der Maschinengondel ein Turmadapter vor, der komplementär zum Kopplungselement ausgeformt ist und welcher zur Zentrierung konische Ablaufflächen umfasst.

Für modulare Offshore-Energieerzeugungsanlagen muss nach dem Aufsetzen der Maschinengondel auf den Turm der elektrische Anschluss der Anlage ausgeführt werden. Typischerweise liegt zu diesem Zweck ein Unterwasserstecker vor, der mit einem von der Anlage weglaufenden elektrischen Verbindungskabel kontaktiert wird, das als Seekabel ausgeführt ist. Zum Schutz außenliegender elektrischer Verbindungskabel verwenden bekannte Bauformen zum Meeresgrund hin horizontal auslaufende Kabelführungen am Turm, sogenannte J-Tubes.

Bekannt ist ferner, das elektrische Verbindungskabel innerhalb der Stützstruktur zu führen, wobei EP 1 985 845 B1 eine Seekabeldurchführung am Turm einer Offshore-Windkraftanlage beschreibt, die in einigen Metern über dem Meeresgrund angeordnet ist. Derartige Seekabeldurchführungen für Offshore-Bauwerke können flüssigkeitsdicht ausgeführt sein. Exemplarisch wird auf EP 2 173 967 B1 und EP 2 381 151 A1 verwiesen. Dabei stellt das Einführen des elektrischen Verbindungskabels in den Turm eine schwierige Unterwassermontage dar, deren Ausführung durch Servicetaucher aufgrund der Tauchtiefe, der Arbeitsdauer und den an interessanten Installationsorten vorliegenden starken Anströmungen gefährlich ist. Daher wurde durch die WO 2011 141494 A1 die Verwendung eines Tauchroboters vorgeschlagen, der zunächst an einem Turm und an einer Montageöffnung eine Schutzvorrichtung installiert und als nachfolgenden Installationsschritt ein elektrisches Verbindungskabel durch diese in das Turminnere einführt. Dann muss das elektrische Verbindungskabel mit einem anlagenseitigen Stecker verbunden werden, sodass ein weiterer unter Wasser auszuführender, aufwendiger Montageschritt folgt.

Der Erfindung liegt die Aufgabe zugrunde, eine Stützstruktur für eine Offshore-Energieerzeugungsanlage anzugeben, für die die elektrische Anlagenanbindung sicher und einfach ausgeführt werden kann. Des Weiteren soll die Stützstruktur das Aufsetzen und Bergen einer Maschinengondel an einer modularen Offshore-Energieerzeugungsanlage erleichtern. Für eine Weitergestaltung soll die Wartung und der Betrieb der Anlage sicher durch menschliches Servicepersonal möglich sein. Ferner ist ein Verfahren zum Errichten einer Offshore-Energieerzeugungsanlage mit einer solchermaßen vorteilhaft gestalteten Stützstruktur anzugeben.

Die voranstehend genannte Aufgabe wird durch die Merkmale der unabhängigen Ansprüche gelöst. Vorteilhafte Ausgestaltungen ergeben sich aus den Unteransprüchen.

Ausgangspunkt der Lösung der voranstehend genannten Aufgabe ist eine Stützstruktur für eine Offshore-Energieerzeugungsanlage mit einer Pfahlgründung, umfassend einen sich unter den Meeresgrund erstreckenden Fundamentpfahl. Ein weiterer Teil der Stützstruktur wird durch einen Turm gebildet, der sich wenigstens mittelbar an der Pfahlgründung abstützt.

Erfindungsgemäß liegt innerhalb der Stützstruktur ein trockenes Kompartiment vor, zu dem eine Zugangsmöglichkeit von unten über ein wasserdicht verschließbares fundamentseitiges Schott besteht. Dabei wird unter einem trockenen Kompartiment ein luftgefüllter, permanent trocken gehaltener Raum verstanden, in dem bevorzugt ein Leistungs- und Betriebsmodul, insbesondere ein Frequenzumrichter, sowie Steuerungseinrichtungen und Transformatoren untergebracht sind.

Ein weiteres erfindungsgemäßes Merkmal betrifft den Zugang zum trockenen Kompartiment, der unten den Meeresgrund verlegt ist. Dabei ist an einer Außenwandung des Fundamentpfahls unterhalb des Meeresgrunds ein Durchgang angeordnet, der in wenigstens mittelbarer Verbindung zum wasserdicht verschließbaren fundamentseitigen Schott des trockenen Kompartiments steht. Damit besteht eine geschützte Zugangsmöglichkeit, die unabhängig von Witterungs- und Strömungseinflüssen für Servicetechniker nutzbar ist. Daher ist die Landanbindung einer die erfindungsgemäße Stützstruktur umfassenden Offshore-Energieerzeugungsanlage vereinfacht, wobei über einen bis zum Durchgang am Fundamentpfahl reichenden Kabeltunnel ein elektrisches Verbindungskabel bis zum fundamentseitigen Schott geführt wird. Dessen Kontaktierung ist an Luft innerhalb des trockenen Kompartiments auf einfache Weise möglich und kann mittels Kontaktklemmen ausgeführt werden.

Für eine bevorzugte Ausgestaltung unterteilt das trockene Kompartiment die Stützstruktur in einen darüber liegenden turmseitigen Innenbereich und einen darunter liegenden fundamentseitigen Innenbereich. Diese Unterteilung kann als flüssigkeitsdichte Abtrennung ausgeführt sein, wobei das fundamentseitige Schott am trockenen Kompartiment den Zugang zum fundamentseitigen Innenbereich bildet.

Für eine bevorzugte Ausgestaltung stellt der fundamentseitige Innenbereich einen wenigstens zeitweise trockenfallenden Bereich dar oder ist bereits vor dem Erstellen der Stützstruktur, das heißt dem Einsetzen des Fundamentpfahls, als trockenes Innenvolumen ausgebildet. Bevorzugt wird nach dem Einsetzen und Auszementieren des Fundamentpfahls im Meeresboden zum Erstellen der erfindungsgemäßen Offshore-Energieerzeugungsanlage der fundamentseitige Innenbereich mittels einer horizontal gerichteten Bohrung angebohrt, sodass der Durchgang unter dem Meeresgrund am Fundamentpfahl geöffnet wird. Besonders bevorzugt wird eine Ausgestaltung, für die auch der so gebohrte Kabeltunnel trockenfallend ausgebildet ist. Entsprechend wird der fundamentseitige Innenbereich trocken gehalten, wobei zu diesem Zweck neben einer geeigneten Abdichtung des Kabeltunnels und des Übergangs zum Durchgang am Fundamentpfahl ein Lenzpumpensystem vorgesehen ist, das innerhalb des trockenen Kompartiments angeordnet ist und im Bodenbereich des fundamentseitigen Innenbereichs schöpft.

Das durch den Kabelkanal und den Durchgang geführte elektrische Verbindungskabel wird bevorzugt durch eine wasserdichte Stopfbuchse in das Innere des trockenen Kompartiments geführt. Dabei kann die Kabeldurchführung dauerhaft durch Auszementieren angelegt sein oder es wird eine einstellbare Kabelführung verwendet, die das Abziehen des elektrischen Verbindungskabels ermöglicht. Die Wasserdichtigkeit der Kabelführung wird ebenso wie das wasserdicht verschließbare fundamentseitige Schott am trockenen Kompartiment aus Sicherheitsgründen auch für den Fall bevorzugt, dass der daran anschließende fundamentseitige Innenbereich trocken ausgebildet ist.

Für eine vereinfachte Ausführung der erfindungsgemäßen Stützstruktur besteht der zusätzliche darunterliegende Luftbereich nicht. Stattdessen ist der fundamentseitige Innenbereich einschließlich des Durchgangs am Fundamentpfahl geflutet. Für diese Ausgestaltung ist das fundamentseitige Schott als Schleusensystem angelegt.

Für eine weitere vorteilhafte Ausgestaltung ist der über dem trockenen Kompartiment liegende turmseitige Innenbereich der Stützstruktur so ausgelegt, dass Umgebungswasser in diesen eindringt. Für diese Ausführung wird ein Betriebskabel, das vom Leistungs- und Betriebsmodul im trockenen Kompartiment ausgeht, flüssigkeitsdicht durch die Wandung des trockenen Kompartiments in den turmseitigen Innenbereich zu einem Leistungs- und Versorgungsstecker geführt, zu dem beim Aufsetzen einer Maschinengondel auf die Stützstruktur ein Funktionskontakt hergestellt wird. Dabei dient das Betriebskabel bevorzugt sowohl der Leistungsübertragung als auch für die Zuführung weiterer Betriebsmedien, beispielsweise eines hydraulischen Druckmediums oder eines Spülmediums, die von Versorgungsaggregaten innerhalb des trockenen Kompartiments eingespeist werden.

Der Funktionskontakt zwischen dem Leistungs- und Versorgungsstecker zu einer auf dem Turm aufgesetzten Maschinengondel kann beim Einführen des Turmadapters der Maschinengondel in die turmseitige Kopplungsvorrichtung erfolgen, indem ein Steckerelement relativ zum Leistungs- und Versorgungsstecker zentriert und von oben in diesen eingeführt wird. Dabei erfolgt das Absetzen der Maschinengondel und deren Funktionsanbindung an der Stützstruktur in einem Arbeitsschritt. Alternativ können beide Montageschritte getrennt werden, indem die Funktionsanbindung erst nach dem Absetzen des Turmadapters der turmseitigen Kopplungsvorrichtung erfolgt. Bevorzugt liegt für diese Ausführung oberhalb des trockenen Kompartiments eine Kabelfangvorrichtung für ein gondelseitiges Verbindungskabel vor, dem eine Steckerhandhabungseinrichtung zugeordnet ist, die eine Funktionsverbindung zu einem Unterwasserstecker herstellt, welcher mit einem in das Innere des trockenen Kompartiments zum Leistungs- und Betriebsmodul geführten Betriebskabel verbunden ist.

Für eine weitere bevorzugte Ausgestaltung besteht die Möglichkeit, auch den turmseitigen Innenbereich zumindest für eine gewisse Betriebsdauer trockenzulegen. Dies ermöglicht den Zugang von Servicetechnikern auch zum trockenen Innenbereich über ein für diese Ausgestaltung vorgesehenes turmseitiges Schott. Für eine mögliche Ausgestaltung besteht vor dem Aufsetzen der Maschinengondel eine Fluidverbindung zwischen dem turmseitigen Innenbereich und der Außenumgebung, sodass im Fall einer tauchenden Stützstruktur Umgebungswasser eindringt. Für das Trockenfallen muss daher zunächst nach dem Aufsetzen der Maschinengondel der turmseitige Innenbereich abgedichtet werden. Eine mögliche Ausgestaltung sieht eine schaltbare Dichtvorrichtung im Bereich der Kopplungsvorrichtung vor, die eine Abdichtung gegen den Turmadapter ermöglicht. In einem weiteren Schritt wird das im turmseitigen Innenbereich vorliegende Wasser nach außen geführt, hierzu dient eine Trockenfalleinrichtung in Form eines Pumpensystems. Denkbar ist auch das Ausblasen mittels eines Druckluftsystems oder eines chemischen Gasgenerators. Im solchermaßen trockengelegten turmseitigen Innenbereich können Montagearbeiten ausgeführt werden, indem ein gondelseitiges Verbindungskabel durch eine wasserdichte Kabeldurchführung in das trockene Kompartiment zum Leistungs- und Versorgungsmodul geführt und dort kontaktiert wird.

Bevorzugt werden weitere Installations- oder Instantsetzungsarbeiten innerhalb des turmseitigen Innenbereichs durch einen Zutritt aus dem trockenen Kompartiment ausgeführt. Vorteilhaft erfolgt die Wartung eines kathodischen Korrosionsschutzsystems durch das Ersetzen austauschbarer Opferanoden. Diese Opferanoden, beispielsweise aus einem Zinkmaterial, können an der Innenseite der Außenwandung des Turms im turmseitigen Innenbereich angebracht sein. Im Fall eines stählernen Turms, dessen Innenwandung betoniert ist, muss ein elektrischer Kontakt zwischen den innenliegenden Opferanoden und der äußeren Stahlhülle bestehen. Des Weiteren muss beim Betrieb nach der Ausführung der Montage- und Servicearbeiten der turmseitige Innenbereich wieder geflutet werden, sodass die für den Schutz notwendige Redoxreaktion stattfinden kann.

Des Weiteren liegen für eine Weitergestaltung am trockenen Kompartiment Rettungseinrichtungen für Servicepersonal vor. Im einfachsten Fall besteht eine Rettungsschleuse vom trockenen Kompartiment zum Außenbereich. Diese kann so ausgestaltet sein, dass ein Mini-U-Boot zum Bergen von Personal andocken kann.

Nachfolgend wird die Erfindung anhand bevorzugter Ausführungsbeispiele in Verbindung mit Figurendarstellungen genauer erläutert. In diesen ist im Einzelnen Folgendes dargestellt:
- Figur 1: zeigt eine erfindungsgemäße Stützstruktur in Schnittansicht.
- Figur 2: zeigt eine erfindungsgemäße Offshore-Energieerzeugungsanlage in Form eines Gezeitenkraftwerkes mit einer Stützstruktur gemäß Figur 1 in Teilschnittansicht.
- Figur 3: zeigt eine Ausgestaltungsalternative einer erfindungsgemäßen Stützstruktur in Schnittansicht.
- Figur 4: zeigt eine erfindungsgemäße Offshore-Energieerzeugungsanlage in Form eines Gezeitenkraftwerks mit einer Stützstruktur gemäß Figur 3 als Teilschnittansicht.
- Figur 5: zeigt ein weiteres Ausgestaltungsbeispiel für eine erfindungsgemäße Offshore-Energieerzeugungsanlage in Form eines Gezeitenkraftwerks in Teilschnittansicht.

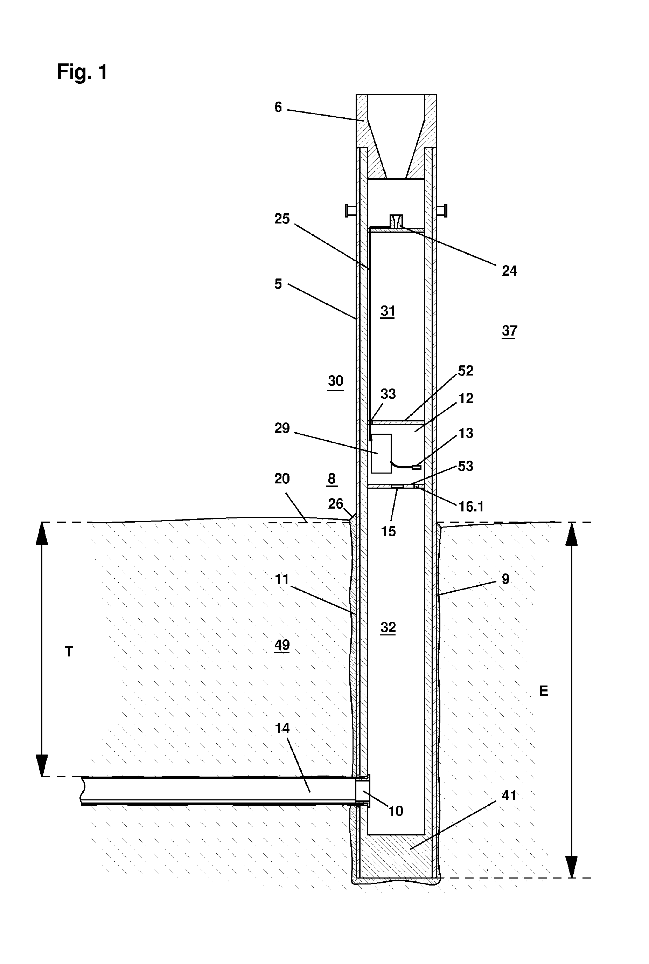

Figur 1 zeigt schematisch vereinfacht eine erfindungsgemäße Stützstruktur 30 für eine Offshore-Energieerzeugungsanlage, insbesondere für ein Gezeitenkraftwerk. Die Stützstruktur 30 ist in Form eines Monopiles ausgebildet, sodass eine einstückige Verbindung zwischen einem Turm 5 und einem einzelnen Fundamentpfahl 9, der eine Pfahlgründung 8 bildet, vorliegt. Der Fundamentpfahl 9 erstreckt sich unter dem Meeresgrund 20 bis zu einer Eindringtiefe E. Die Fixierung des Fundamentpfahls 9 erfolgt mittels einer Zementierung 26 in einer Bohrung im Meeresboden 49.

Am oberen Ende des Turms 5 befindet sich eine Kopplungsvorrichtung 6, die für das vorliegende Ausgestaltungsbeispiel zur Außenumgebung 37 hin offen ist, sodass bei einer vollständig tauchenden Stützstruktur 30 Umgebungswasser in einen turmseitigen Innenbereich 31 eindringt. Der wasserführende Bereich endet an einem erfindungsgemäß innerhalb der Stützstruktur 30 angeordneten trockenen Kompartiment 12, dessen Deckenbereich 52 und dessen Bodenbereich 53 den freien Querschnitt im Inneren der Stützstruktur 30 gegen den Zutritt von Umgebungswasser abdichten. Unterhalb des trockenen Kompartiments 12 befindet sich ein fundamentseitiger Innenbereich 32 der Stützstruktur 30, den das trockene Kompartiment 12 bevorzugt fluiddicht vom turmseitigen Innenbereich 31 abtrennt.

Am Bodenbereich 53 des trockenen Kompartiments 12 liegt ein fundamentseitiges Schott 15 vor, das einen Durchgang vom fundamentseitigen Innenbereich 32 in das Innere des trockenen Kompartiments in der Offenstellung ermöglicht und in der Geschlossen-Stellung einen fluiddichten Abschluss des trockenen Kompartiments 12 bewirkt. Des Weiteren liegt erfindungsgemäß am fundamentseitigen Innenbereich 32 auf einer Austrittstiefe T unterhalb dem Meeresgrund 20 ein Durchgang 10 vor, der sich durch die Außenwandung 11 des Fundamentpfahls 9 erstreckt. Durch diesen Durchgang 10 besteht eine Durchtrittsmöglichkeit für Versorgungsleitungen und besonders bevorzugt für menschliches Servicepersonal.

Innerhalb des trockenen Kompartiments 12 sind die wichtigsten Aggregate der Anlage in Form eines Leistungs- und Betriebsmoduls 29 an Luft angeordnet. Dabei umfasst das Leistungs- und Betriebsmodul 29 insbesondere leistungselektronische Komponenten, wie einen Frequenzumrichter sowie einen elektrischen Transformator. Weitere Komponenten stellen Signalverarbeitungsmodule zur Auswertung von sensorischen Daten sowie Steuervorrichtungen dar. Des Weiteren werden Aggregate zur Bereitstellung von Betriebsmedien, wie einem hydraulischen Druckmedium oder einem Spülmedium, in das Leistungs- und Betriebsmodul 29 integriert. Zusätzlich liegt bevorzugt innerhalb des trockenen Kompartiments 12 ein Anschlusselement 13 vor, das in Verbindung zum Leistungs- und Betriebsmodul 29 steht und für den Anschluss eines elektrischen Verbindungskabels zur Landanbindung dient. Für dessen Einführung in das trockene Kompartiment 12 ist bevorzugt im Bodenbereich 53 eine einstellbare Kabelführung 16.1 vorgesehen.

Vom Leistungs- und Betriebsmodul 29 innerhalb des trockenen Kompartiments 12 geht ein Betriebskabel 25 aus, das flüssigkeitsdicht durch eine dauerhafte Kabeldurchführung 33 im Deckenbereich 52 verlegt ist. Das Betriebskabel 25 dient der Leistungsübertragung und zur Führung von Betriebsmedien, wie einer hydraulischen Flüssigkeit oder Druckluft beziehungsweise einer Spülflüssigkeit, und ist in den Bereich der Kopplungsvorrichtung 6 bis zu einem Leistungs- und Versorgungsstecker 24 verlegt, der unter Wasser steckbar ausgeführt ist.

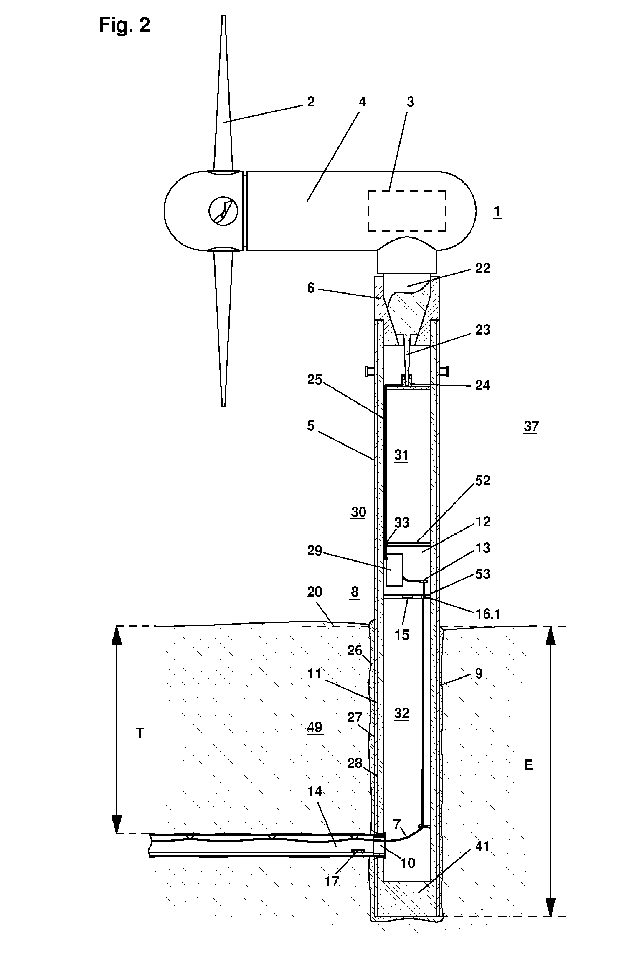

Figur 2 zeigt eine Offshore-Energieerzeugungsanlage 1 in Form eines Gezeitenkraftwerks, deren Stützstruktur 30 dem Ausführungsbeispiel gemäß Figur 1 entspricht. Übereinstimmende Komponenten sind mit den gleichen Bezugszeichen bezeichnet. Die dargestellte Offshore-Energieerzeugungsanlage 1 weist einen propellerförmigen, vollständig tauchenden Leistungsaufnehmer 2 auf, dessen Profil an einen bidirektionalen Betrieb zur Energiegewinnung aus einer Gezeitenströmung angepasst ist. Der Leistungsaufnehmer 2 ist wenigstens mittelbar mit einem innerhalb einer Maschinengondel 4 untergebrachten, lediglich skizzierten elektrischen Generator 3 verbunden. Dabei wird insbesondere eine direkte Triebverbindung zwischen dem Leistungsaufnehmer 2 und dem Läufer des elektrischen Generators 3 bevorzugt. Alternative Ausgestaltungen verwenden hydraulische oder mechanische Zwischengetriebe im Antriebsstrang.

Die Maschinengondel 4 umfasst einen Turmadapter 22, der in die Kopplungsvorrichtung 6 am Turm 5 der Stützstruktur 30 eingesetzt ist. Bodenseitig am Turmadapter 22 befindet sich ein Steckerelement 23, das so ausgebildet ist, dass bei einer formschlüssigen Fixierung des Turmadapters 22 in der komplementär geformten Kopplungsvorrichtung 6 ein Einrasten in den Leistungs- und Versorgungsstecker 24 so bewirkt wird, dass eine Funktionsverbindung hergestellt ist. Im installierten Zustand besteht daher eine Verbindung über das Betriebskabel 25 zum Leistungs- und Betriebsmodul 29 innerhalb des trockenen Kompartiments 12.

Des Weiteren weist eine erfindungsgemäße Offshore-Energieerzeugungsanlage 1 einen Kabeltunnel 14 auf, der im Meeresboden 49 verläuft und auf der Austrittstiefe T unter dem Meeresgrund 20 an den Durchgang 10 durch die Außenwandung 11 des Fundamentpfahls 9 fluchtend anschließt. Für die dargestellte bevorzugte Ausgestaltung umfasst der Kabeltunnel 14 ein Transportsystem 17, das zum Einziehen eines elektrischen Verbindungskabels 7 dient. Das elektrische Verbindungskabel 7 wird durch den Durchgang 10 und den fundamentseitigen Innenbereich 32 der Stützstruktur 30 bis zum trockenen Kompartiment 12 verlegt. Dabei läuft das elektrische Verbindungskabel 7 durch eine einstellbare Kabeldurchführung 16.1 im Bodenbereich 53 des trockenen Kompartiments 12 und wird innerhalb des trockenen Kompartiments 12 an ein Anschlusselement 13 angeklemmt. Für die notwendigen Installationsarbeiten besteht bevorzugt eine Zugangsmöglichkeit für menschliches Servicepersonal durch den Kabeltunnel 14 und den Durchgang 10 sowie das fundamentseitige Schott 15 bis zum trockenen Kompartiment 12. Es liegt daher eine sichere, wetterunabhängige Zugangsmöglichkeit für Service- und Montagearbeiten zur Landanbindung und den Dauerbetrieb der Offshore-Energieerzeugungsanlage 1 vor.

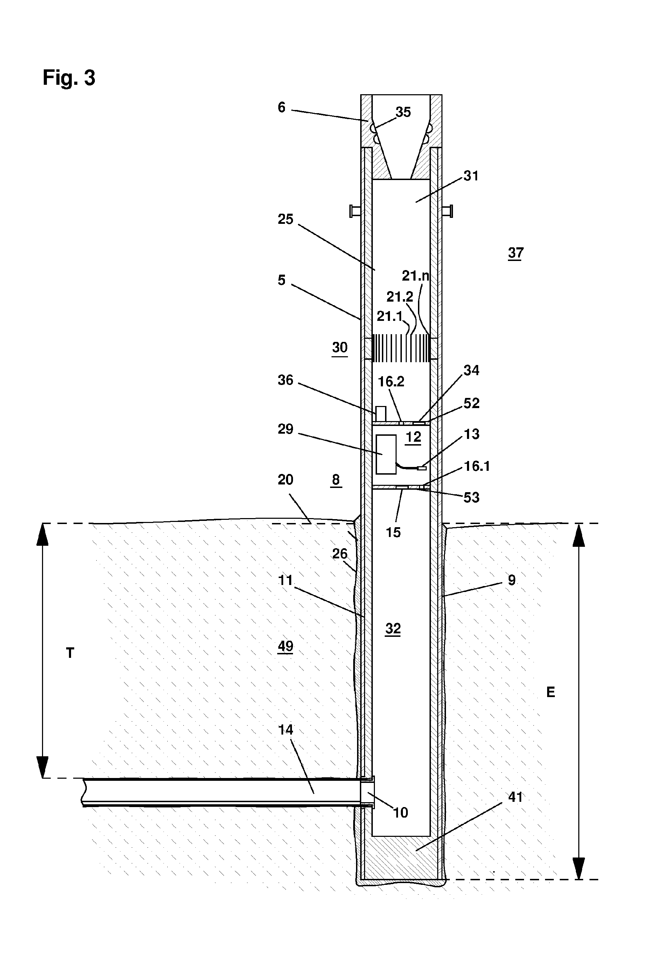

Die Figur 3 zeigt ein weiteres Ausführungsbeispiel einer erfindungsgemäßen Stützstruktur, die bevorzugt für eine Energieerzeugungsanlage 1 in Form eines Gezeitenkraftwerks dient. Die mit der Ausführungsform gemäß Figur 1 übereinstimmenden Komponenten werden mit den gleichen Bezugszeichen versehen und im Folgenden nicht weiter erläutert. Die Weitergestaltung des Ausführungsbeispiels von Figur 3 betrifft ein turmseitiges Schott 34 am Deckenbereich 52 des trockenen Kompartiments 12. Dies ermöglicht einen Ausstieg aus dem trockenen Kompartiment 12 in den turmseitigen Innenbereich 31. Gemäß einer vereinfachter Ausgestaltung ist dieser turmseitige Innenbereich 31 ständig wasserführend, sodass das turmseitige Schott 34 als Schleusensystem ausgebildet ist und die auszuführenden Arbeiten von Tauchern bewerkstelligt werden müssen. Dabei wird der turmseitige Innenbereich 31 weitestgehend durch die Wandungen des Turms 5 von der Strömung in der Außenumgebung 37 abgeschirmt, sodass auszuführende Installationsarbeiten relativ sicher bewerkstelligt werden können.

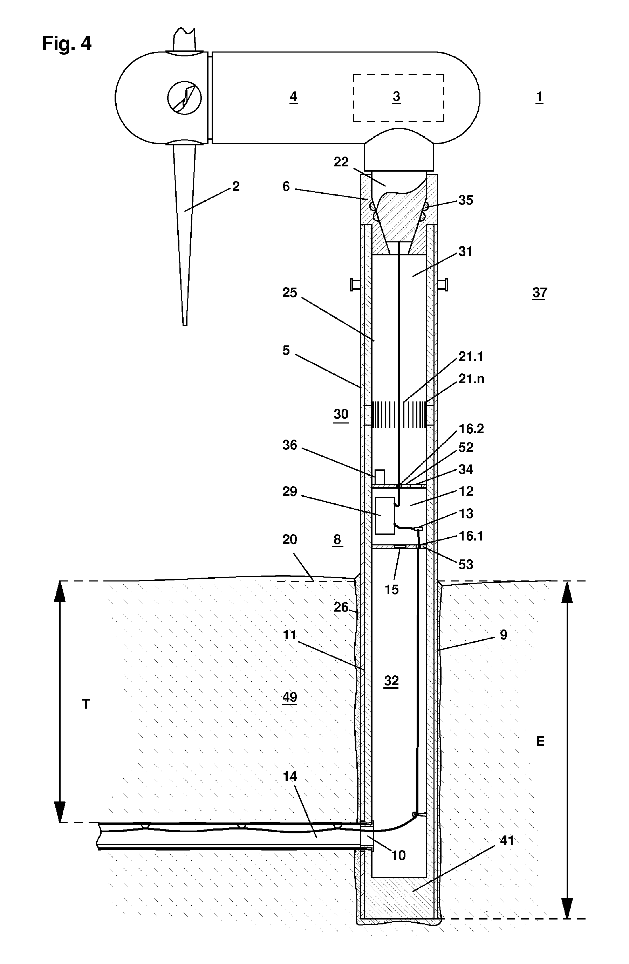

Gemäß der in Figur 3 gezeigten bevorzugten Ausgestaltung besteht eine Möglichkeit zum Trockenlegen des turmseitigen Innenbereichs 31, wobei zu diesem Zweck an der Kopplungsvorrichtung 6 eine schaltbare Dichtvorrichtung 35 vorgesehen ist. Des Weiteren liegt eine Trockenfalleinrichtung 36 vor, die beispielsweise mittels einer chemischen Reaktion ein so hinreichend großes Gasvolumen produziert, dass ein abgedichteter turmseitiger Innenbereich 31 freigeblasen werden kann. Dies wird nachfolgend anhand des in Figur 4 dargestellten Ausführungsbeispiels einer erfindungsgemäßen Offshore-Energieerzeugungsanlage 1 verdeutlicht.

Für die Ausgestaltung gemäß Figur 4 werden für die in der Ausführungsform von Figur 2 übereinstimmenden Komponenten die gleichen Bezugszeichen verwendet. Gezeigt ist ein mittels der schaltbaren Dichtvorrichtung 35 gegen die Kopplungsvorrichtung 6 am Turm 5 abgedichteter Turmadapter. Damit ist der turmseitige Innenbereich 31 fluidisch von der Außenumgebung 37 abgetrennt. Nach Herstellung dieser fluidischen Entkopplung kann die Trockenfalleinrichtung 36 den turmseitigen Innenbereich 31 freiblasen, sodass oberhalb des Trockenkompartiments 12 ein trockenfallender Raum entsteht, in den Servicetechniker über das turmseitige Schott 34 gefahrlos einsteigen können. Die für das Freiblasen notwendigen Auslassventile am Turm 5 sind im Einzelnen nicht dargestellt. Hierdurch kann ein gondelseitiges Verbindungskabel 50 vereinfacht zwischen dem Turmadapter 22, der Maschinengondel 4 und dem Leistungs- und Betriebsmodul 29 durch eine fluiddichte einstellbare Kabeldurchführung 16.1 im Deckenbereich 52 des Trockenkompartiments geführt werden.

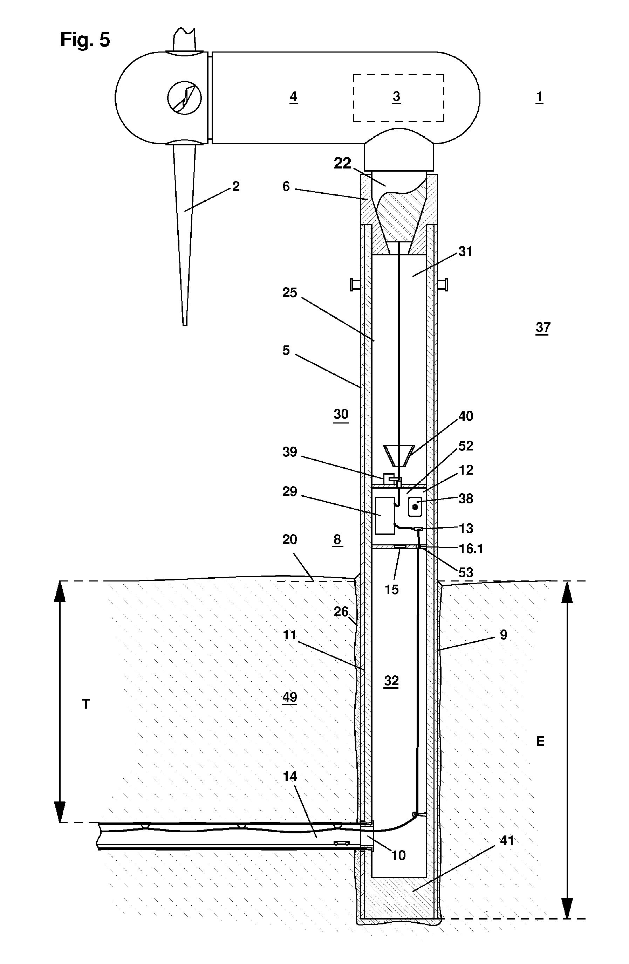

Für eine vorteilhafte Weitergestaltung ist im turmseitigen Innenbereich 31 ein kathodisches Korrosionsschutzsystem mit Opferanoden 21.1, ..., 21.n angeordnet. Diese sind durch den Betoninnenmantel 28 hindurch mit dem äußeren Stahlrohr 27 des Turms elektrisch leitend verbunden, um die stählerne Außenhülle der Stützstruktur 30 gegen Korrosion zu schützen. Dabei besteht die Notwendigkeit die Opferanoden 21.1, ..., 21.n regelmäßig auszutauschen, wobei durch das Trockenfallen des turmseitigen Innenbereichs 31 diese Wartungsarbeiten wesentlich erleichtert werden. Zur Funktion des kathodischen Korrosionsschutzelements müssen die Opferanoden 21.1, ..., 21.n umspült sein, sodass für die bevorzugte Ausgestaltung im Dauerbetrieb die schaltbare Dichtvorrichtung 35 erneut geöffnet wird, um den Zustrom von Umgebungswasser von der Außenumgebung 37 in den turmseitigen Innenbereich 31 zu gestatten. Dabei wird das trockene Kompartiment gegen einen Wassereinbruch mittels des turmseitigen Schotts 34 und der einstellbaren Kabeldurchführung 16.2 geschützt. Figur 5 zeigt eine alternative Ausgestaltung einer erfindungsgemäßen Offshore-Energieerzeugungsanlage, wobei den mit Figur 2 übereinstimmenden Komponenten die gleichen Bezugszeichen zugeordnet sind. Gewählt ist eine Ausführung mit einem dauerhaft gefluteten turmseitigen Innenbereich 31, sodass kein Durchgang durch den Deckenbereich 52 am trockenen Kompartiment 12 besteht. Für die dargestellte Ausgestaltung wird ferner auf ein fix verlegtes Betriebskabel 25 über einen zugeordneten Leistungs- und Versorgungsstecker 24 verzichtet. Stattdessen wird nach dem Aufsetzen der Maschinengondel 4 mittels des Turmadapters 22 in der Kopplungsvorrichtung 6 am Turm 5 von der Maschinengondel 4 aus ein gondelseitiges Verbindungskabel 50 durch den turmseitigen Innenbereich 31 bis zum Deckenbereich 52 des Trockenkompartiments 12 abgelassen. An dessen Ende befindet sich ein Unterwasserstecker 51, der mittels einer Kabelfangvorrichtung 40 und einer Steckerhandhabungseinrichtung 39 innerhalb des turmseitigen Innenbereichs 31 in Funktionsverbindung zu einer Steckerbuchse 54 auf der Außenseite des Deckenbereichs 52 geführt wird. Dadurch entsteht eine Funktionsverbindung über eine an die Steckerbuchse 54 anschließende Verbindungsleitung 55 zum Leistungs- und Betriebsmodul 29 innerhalb des trockenen Kompartiments 12.

Für eine vorteilhafte Weitergestaltung befinden sich zusätzlich Sicherheits- und Rettungsausstattungen innerhalb des Trockenkompartiments, sodass Servicetechniker im Havariefall, beispielsweise bei einem Wassereintritt in den Kabeltunnel 14, einen sicheren Fluchtraum vorfinden. Für eine vorteilhafte Ausgestaltung liegt eine Rettungsschleuse 38 vor, die vom trockenen Kompartiment 12 zur Außenumgebung führt. Durch diese ist ein Ausstieg mittels einer Tauchausrüstung möglich. Des Weiteren ist eine Ausgestaltung denkbar, für die außen am Turm im Bereich der Rettungsschleuse 38 eine Unterwasserbergungseinrichtung, beispielsweise in Form eines Mini-U-Boots, andocken kann.

Das trockene Kompartiment 12 für die voranstehend erläuterten Ausführungsbeispiele kann auf einer unterschiedlichen Höhe innerhalb der Stützstruktur 30 angeordnet sein. Die dargestellten Ausführungen zeigen die Platzierung des trockenen Kompartiments 12 oberhalb des Meeresgrunds 20 und somit im Bereich des Turms 5 der Stützstruktur 30. Durch diese Maßnahme besteht ein vereinfachter Notausstieg, beispielsweise über eine Rettungsschleuse 38.

Für eine alternative, vorteilhafte Ausgestaltung liegt das trockene Kompartiment 12 tiefer im Bereich oder unterhalb des Meeresgrunds 20, sodass dieses einen Teil des Fundamentpfahls 9 der Stützstruktur 30 bildet. Durch diese Maßnahme liegt das fundamentseitige Schott 15 näher am Durchgang 10, der sich am Fundamentpfahl 9 unterhalb des Meeresgrunds 20 befindet. Dadurch wird die Ausdehnung des fundamentseitigen Innenbereichs 32 und damit dessen Auftrieb begrenzt, sodass dieser bereits bei der Erstellung der Stützstruktur 30 an Land trocken ausgebildet werden kann. Für diesen Fall wird der Durchgang 10 erst nach dem Einsetzen des Fundamentpfahls 9 in den Meeresboden 49 geöffnet. Besonders bevorzugt erfolgt ein Anbohren bei der Erstellung des Kabeltunnels 14 mittels einer horizontal gerichteten Bohrung. Zu diesem Zweck besteht im Bereich des späteren Durchgangs 10 am Stahlrohr 27 der Außenwandung 11 des Fundamentpfahls 9 eine Ausnehmung, sodass an dieser Stelle der bohrbare Betoninnenmantel 28 frei liegt. Alternativ kann der Fundamentsockel 41 von innen oder außen zur Schaffung des Durchgangs 10 nach dem Einsetzen des Fundamentpfahls 9 durchbohrt werden. Weitere Ausgestaltungen im Rahmen der nachfolgenden Schutzansprüche sind denkbar.

### Bezugszeichenliste

- 1: Offshore-Energieerzeugungsanlage
- 2: Leistungsaufnehmer
- 3: elektrischer Generator
- 4: Maschinengondel
- 5: Turm
- 6: Kopplungsvorrichtung
- 7: elektrisches Verbindungskabel
- 8: Pfahlgründung
- 9: Fundamentpfahl
- 10: Durchgang
- 11: Außenwandung
- 12: trockenes Kompartiment
- 13: Anschlusselement
- 14: Kabeltunnel
- 15: fundamentseitiges Schott
- 16.1, 16.2: einstellbare Kabeldurchführung
- 17: Transportvorrichtung
- 20: Meeresgrund
- 21.1, ..., 21.n: Opferanode
- 22: Turmadapter
- 23: Steckerelement
- 24: Leistungs- und Versorgungsstecker
- 25: Betriebskabel
- 26: Zementierung
- 27: Stahlrohr
- 28: Betoninnenmantel
- 29: Leistungs- und Betriebsmodul
- 30: Stützstruktur
- 31: turmseitiger Innenbereich
- 32: fundamentseitiger Innenbereich
- 33: dauerhafte Kabeldurchführung
- 34: turmseitiges Schott
- 35: schaltbare Dichtvorrichtung
- 36: Trockenfalleinrichtung
- 37: Außenumgebung
- 38: Rettungsschleuse
- 39: Steckerhandhabungseinrichtung
- 40: Kabelfangvorrichtung
- 41: Fundamentsockel
- 49: Meeresboden
- 50: gondelseitiges Verbindungskabel
- 51: Unterwasserstecker
- 52: Deckenbereich
- 53: Bodenbereich
- 54: Steckerbuchse
- 55: Verbindungsleitung
- E: Eindringtiefe
- T: Austrittstiefe

## Patentansprüche

1. Stützstruktur für eine Offshore-Energieerzeugungsanlage (1), umfassend eine Pfahlgründung (8) mit wenigstens einem Fundamentpfahl (9), der sich unter den Meeresgrund (20) erstreckt; und
einen Turm (5), der sich wenigstens mittelbar an der Pfahlgründung (8) abstützt;
**dadurch gekennzeichnet, dass**
innerhalb der Stützstruktur (21) ein trockenes Kompartiment (12) mit einem wasserdicht verschließbaren fundamentseitigem Schott (15) vorliegt, das in wenigstens mittelbarer Verbindung zu einem Durchgang (10) steht, der sich unter dem Meeresgrund (20) durch eine Außenwandung (11) des Fundamentpfahls (9) erstreckt.

2. Stützstruktur nach Anspruch 1, wobei innerhalb der Pfahlgründung (8) ein turmseitiger Innenbereich (31) und ein fundamentseitiger Innenbereich (32) vorliegen, wobei das trockene Kompartiment (12) zwischen dem turmseitigen Innenbereich und dem fundamentseitigen Innenbereich angeordnet ist und das fundamentseitige Schott (15) und der Durchgang (10) an der Außenwandung (11) des Fundamentpfahls (9) an den fundamentseitigen Innenbereich (32) anschließen.

3. Stützstruktur nach einem der Ansprüche 1 oder 2, wobei innerhalb des trockenen Kompartiments (12) ein Leistungs- und Betriebsmodul (29) angeordnet ist, von dem ein Betriebskabel (25) ausgeht, das in den turmseitigen Innenbereich (31) geführt ist.

4. Stützstruktur nach Anspruch 3, wobei ein unter Wasser steckbarer Leistungs- und Versorgungsstecker (24) im turmseitiger Innenbereich (31) angeordnet ist, der mit dem Betriebskabel (25) verbunden ist.

5. Stützstruktur nach Anspruch 3, wobei am trockenen Kompartiment (12) eine wasserdichte, einstellbare Kabeldurchführung (16.1, 16.2) vorliegt.

6. Stützstruktur nach einem der vorausgehenden Ansprüche, wobei am trockenen Kompartiment (12) ein wasserdicht verschließbares turmseitiges Schott (34) vorliegt, das zum turmseitigen Innenbereich (31) führt.

7. Stützstruktur nach Anspruch 6, wobei an der Innenwandung des turmseitigen Innenbereichs (31) austauschbare Opferanoden (21.1, ..., 21.n) eines kathodischen Korrosionsschutzsystems angeordnet sind.

8. Stützstruktur nach einem der vorausgehenden Ansprüche, wobei dem turmseitigen Innenbereich (31) eine schaltbare Dichtungsvorrichtung (35) zur wasserdichten Abschottung gegen die Außenumgebung (37) und eine Trockenfalleinrichtung (36) zugeordnet sind.

9. Stützstruktur nach Anspruch 8, wobei am Turm (5) ein Kopplungselement (23) zur Aufnahme eines Turmadapters (22) einer Maschinengondel (4) vorliegt und die schaltbare Dichtungsvorrichtung (35) so angelegt ist, dass die wasserdichte Abschottung gegen die Außenumgebung (37) als Abdichtung gegen den Turmadapter (22) ausführbar ist.

10. Stützstruktur nach einem der vorausgehenden Ansprüche, wobei mit dem trockenen Kompartiment (12) eine Rettungsschleuse (38) verbunden ist, die aus dem Turm (5) oder der Pfahlgründung (8) heraus zur Außenumgebung (37) führt.

11. Offshore-Energieerzeugungsanlage mit einer Stützstruktur (30) nach einem der vorausgehenden Ansprüche und einem unterhalb des Meeresgrunds (20) verlaufenden Kabeltunnel (14) der außerhalb des Fundamentpfahls (9) an den Durchgang (10) anschließt.

12. Offshore-Energieerzeugungsanlage nach Anspruch 11, wobei ein elektrisches Verbindungskabel (7) im Kabeltunnel (14) verläuft und im trockenen Kompartiment (12) elektrisch kontaktiert ist.

13. Offshore-Energieerzeugungsanlage nach einem der Ansprüche 11 oder 12, wobei der Kabeltunnel (14) trockenfallend ausgebildet ist.

14. Offshore-Energieerzeugungsanlage nach Anspruch 13, **dadurch gekennzeichnet, dass** der Kabeltunnel (14) begehbar ist und/oder eine Transportvorrichtung (17) umfasst.

15. Verfahren zum Errichten einer Offshore-Energieerzeugungsanlage, mit dem Verfahrensschritten:
Errichten einer Pfahlgründung (8) mit wenigstens einem Fundamentpfahl (9), der sich unter den Meeresgrund (20) erstreckt, und eines sich wenigstens mittelbar an der Pfahlgründung (8) abstützenden Turms (5),
wobei innerhalb der Stützstruktur (21) ein trockenes Kompartiment (12) vorliegt; und
Anlegen eines unter dem Meeresgrund (20) zum Fundamentpfahl (9) reichenden Kabeltunnels (14) und eines Durchgang (10), der sich unter dem Meeresgrund (20) durch eine Außenwandung (11) des Fundamentpfahls (9) erstreckt, wobei der Durchgang (10) in wenigstens mittelbarer Verbindung zu einem wasserdicht verschließbaren fundamentseitigem Schott (15) am trockenen Kompartiment (12) steht.
